(19) Europäisches Patentamt
European Patent Office
Office européen des brevets

(11) EP 3 944 388 A1

(12) EUROPEAN PATENT APPLICATION

(43) Date of publication:
26.01.2022 Bulletin 2022/04

(51) International Patent Classification (IPC):
H01M 10/052 (2010.01)   H01M 10/0565 (2010.01)

(21) Application number: 20187223.1

(52) Cooperative Patent Classification (CPC):
H01M 10/052; H01M 10/0565; H01M 50/00

(22) Date of filing: 22.07.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: ETH Zurich
8092 Zurich (CH)

(72) Inventors:
• WOOD, Vanessa
8610 Uster (CH)
• BAADE, Paul
8004 Zürich (CH)

(54) METHOD, COATING DEVICE AND PREPARATION FOR FORMING FUNCTIONAL LAYERS OF AN ELECTROCHEMICAL STORAGE DEVICE

(57) The invention relates to a method for generating functional layers (110, 120, 130) of an electrochemical storage device, comprising: providing a first preparation (P1) in a first reservoir (10) of a coating device (1), providing a second preparation (P2) in a second reservoir (20) of said coating device (1), placing said coating device (1) above a substrate (200) and moving said coating device (1) relative to the substrate (200) along a coating direction (C), dispensing the first preparation (P1) from the first reservoir (10) through a first slot (11) of the coating device (1) onto a coating surface (210) of the substrate (200), wherein the first slot (11) extends along a lateral axis (L) perpendicular to the coating direction (C) and parallel to the coating surface (210), and simultaneously dispensing the second preparation (P2) from the second reservoir (20) through a second slot (21) of the coating device (1) onto the substrate (200), wherein the second slot (21) extends along the lateral axis (L), wherein the first preparation (P1) and the second preparation (P3) form a curtain (310, 320) between the coating device (1) and the substrate (200), and wherein a first functional layer (110) of the electrochemical storage device is formed on the coating surface (210) from the first preparation (P1), and a second functional layer (120) of the electrochemical storage device is simultaneously formed on the first functional layer (110) from the second preparation (P2). The invention further relates to a coating device (1) and a preparation (P1, P2, P3, P4) for generating functional layers (110, 120, 130) of an electrochemical storage device.

Fig. 1

**Description**

The invention relates to a method and a coating device for forming functional layers of an electrochemical storage device and a preparation for forming a functional layer of an electrochemical storage device.

Electrochemical storage devices within the meaning of the present specification are devices which are capable of storing electrical energy due to their chemical composition. For example, such devices may be batteries, particularly solid-state batteries, e.g. solid-state lithium ion batteries or solid-state sodium ion batteries or capacitors, e.g. super-capacitors. In such solid-state batteries the charged species (e.g. lithium or sodium ions) migrating between the anode and the cathode of the battery during charging and discharging is embedded in a solid matrix (e.g., comprising an inorganic material, polymers, or a mixture of inorganic material and polymers) forming a solid-state electrolyte.

The above described electrochemical storage devices are often structured into functional layers fulfilling different functions in the electrochemical storage device. The functional layers may be electrochemically active layers, i.e., they may be adapted to store or transport charged species such as ions or electrons, or they may be electrochemically passive layers (i.e., not adapted to store or transport charged species). Functional layers adapted for ion storage may be intercalation hosts, such as anode layers or cathode layers. Furthermore, functional layers configured for ion transport may be e.g. solid-state electrolytes, and functional layers adapted for electron transport may e.g. serve as a current collector. A nonlimiting example of an electrochemically passive layer is a protective layer (typically arranged on the outermost layer) that is adapted to protect the active layers e.g. from corrosion or degradation).

Solid-state electrolytes eliminate the use of organic flammable liquid electrolytes by replacing the liquid with a solid, which is not as easily combustible. This significantly reduces the fire hazard during use of devices powered by such solid-state electrochemical storage devices. In addition, some solid-state electrolytes are more electrochemically stable. Furthermore, solid-state electrolyte batteries do not require a separator since the structural integrity of the solid electrolyte prevents internal short-circuiting between anode and cathode. In some combinations of active materials (i.e. with the use of lithium metal) solid state electrolyte batteries can be more energy dense than state of the art batteries with liquid electrolytes.

Despite these advantages, manufacturing costs and manufacturing throughput of electrochemical storage devices comprising solid-state electrolytes are non-optimal when using methods of the prior art. Therefore, solid-state electrolyte batteries currently cannot compete economically with batteries using liquid electrolytes.

Hence, the objective of the present invention is to provide a method (as well as a coating device and a preparation) for generating functional layers of an electrochemical storage device which is able to reduce manufacturing times and costs compared to the methods of the prior art.

This objective is attained by the subject matter of the independent claims. Embodiments of the invention are specified in the dependent claims and described hereafter.

A first aspect of the invention relates to a method for generating functional layers of an electrochemical storage device, comprising:

- providing a first preparation in a first reservoir of a coating device,

- providing a second preparation in a second reservoir of the coating device,

- placing the coating device above a substrate and moving the coating device relative to the substrate along a coating direction,

- dispensing the first preparation from the first reservoir through a first slot of the coating device onto a coating surface of the substrate, wherein the first slot extends along a lateral axis perpendicular to the coating direction and parallel to the coating surface, and simultaneously dispensing the second preparation from the second reservoir through a second slot of the coating device onto the substrate, wherein the second slot extends along the lateral axis,

- wherein the first preparation and the second preparation form a curtain between the coating device and the substrate, and

- wherein a first functional layer of the electrochemical storage device is formed on the coating surface of the substrate from the first preparation, and a second functional layer of the electrochemical storage device is simultaneously formed on the first functional layer from the second preparation.

In certain embodiments, the first preparation and the second preparation jointly form a curtain between the coating device and the substrate.

In particular, the coating device may comprise a coating head or nozzle comprising at least the first slot and the second slot and optionally also the first and the second reservoir (alternatively, the first and second reservoir may be disposed outside of the coating head or nozzle and in fluid connection with the first or second slot). For example, the first and the second reservoir may be formed by a cavity in the coating head or nozzle or by a manifold that is insertable in a cavity of the coating head or nozzle. The first preparation and the second preparation may be provided in the first and second reservoir by pumps which transport the first and second preparation from a separate storage reservoir into the respective first or second reservoir of the coating device, e.g. via a tubing or conduit. Of course, the coating device may comprise one or several additional reservoirs and associated slots to deposit additional functional layers of the electrochemical storage device, particularly simultaneously with the first and second functional layer.

The coating device is particularly moved relative to the substrate by placing the substrate (e.g. in the form of a film or web) on a conveyor belt and driving the conveyor belt such that the substrate moves below the coating head or nozzle of the coating device, wherein the coating device remains stationary. Of course, it is also possible within the scope of the invention to move the coating head or nozzle of the coating device while the substrate remains stationary.

In particular, the coating device is arranged such that the first slot is arranged closer to the coating surface of the substrate than the second slot. In this manner, it is ensured that the second functional layer is formed on top of the first functional layer.

In certain embodiments, the first and the second preparation (and optionally the third and/or the at least one further preparation) dispensed from the first and the second slot (and optionally the third and/or the at least one further slot) of the coating device, particularly a coating die, form layers on top of each other on a dispensing surface (also termed "slide") of the coating device and flow down from the dispensing surface onto the coating surface of the substrate in a layered curtain. In other words, the first and the second preparation (and optionally the third and/or the at least one further preparation) are dispensed by slide curtain coating. In this manner, it is possible to generate the functional layers simultaneously.

Alternatively, it is also possible to dispense the first and the second preparation from slots on a bottom side of the coating device (particularly the coating die), wherein the slots are arranged adjacent to each other, such that a layered curtain is formed from the first and the second preparation at the exit of the slots. Such a coating device particularly does not contain a dispensing surface (slide). This method is also known as "slot curtain coating" and the corresponding coating die is termed "slot die". In contrast to slot coating, slide coating has the advantage that the number of slots and, correspondingly, the number of generated layers is not limited by geometric constraints.

The first preparation and the second preparation is particularly a liquid or a slurry, such that it can be dispensed from the respective slot of the coating device. Therein, the term slurry describes a composition comprising a liquid solvent or monomer and particles (particularly having a diameter from 1 nm and 500 $\mu$m) suspended in the liquid solvent or monomer.

The first preparation and the second preparation form a curtain while being dispensed from the respective slot of the coating device onto the coating surface of the substrate. Therefore, the method described above may be described as a curtain coating method. Within the scope of the present specification, the term 'curtain' describes a continuous free-falling sheet of a liquid or slurry material. To obtain such a curtain, it is necessary to adjust the flow rate of the first or second preparation dispensed from the respective first or second slot, the coating speed at which the substrate moves relative to the coating device and the rheological properties (e.g. the viscosity) of the first and second preparation (particularly such that the first or second preparation exhibits a shear thinning behavior, i.e. a drop of the viscosity at increasing shear rates).

Advantageously, curtain coating benefits from an effect termed hydrodynamic assist: the free-falling curtain creates a pressure field at the point of impingement on the coating surface of the substrate, which allows the formation of a sufficiently thin layer (e.g. 30 $\mu$m or less, particularly 5 $\mu$m or less) without any defects at very high coating speeds (e.g. about 40 m/min to more than 2500 m/min).

Furthermore, the inventors found that it is possible to apply several layers of material simultaneously onto the substrate by curtain coating. Therefore, it is no longer necessary to separately process (e.g. dry or hot-press) the separate layers which significantly improves manufacturing times of the resulting electrochemical storage devices.

In certain embodiments, a third preparation is provided in a third reservoir of the coating device, and wherein the third preparation is dispensed onto the substrate through a third slot of the coating device simultaneously to the first preparation and the second preparation, wherein the third preparation forms a curtain between the coating device and the substrate, and wherein a third functional layer of the electrochemical storage device is formed on the second functional layer from the third preparation.

In certain embodiments, the first preparation, the second preparation and the third preparation jointly form a curtain between the coating device and the substrate.

In certain embodiments, at least one further preparation is provided in a further reservoir of the coating device, wherein the further preparation is dispensed onto the substrate through a further slot of the coating device simultaneously to the first preparation, the second preparation and the third preparation, wherein the further preparation forms a curtain between the coating device and the substrate, and wherein a further functional layer of the electrochemical storage device is formed on the third functional layer from the further preparation.

In certain embodiments, the first preparation, the second preparation, the third preparation and the at least one further preparation jointly form a curtain between the coating device and the substrate.

In certain embodiments, the first preparation and the second preparation (and particularly also the third preparation and the at least one further preparation) exhibit a shear thinning behavior, i.e., a drop of viscosity at increasing shear rates.

In certain embodiments, the first preparation and the second preparation (and particularly also the third preparation and the at least one further preparation) comprise the same solvent or the same polymerizable monomer at the same concentration such that no diffusion occurs at an interface of the first preparation and the second preparation (particularly any of the first, second, third and at least one further preparation), particularly in the resulting functional layer of the electrochemical storage device. In certain embodiments, the first preparation and the second preparation (and particularly also the third preparation and the at least one further preparation) comprise the same salt composition at the same concentration, such that no diffusion occurs at an interface of the first preparation and the second preparation (particularly any of the first, second, third and at least one further preparation).

This particularly reduces diffusion gradients in the generated functional layers after deposition on the substrate, and, combined with the laminar flow during curtain coating, reduces mixing between the layers to a minimum and thus improves the quality of the interface of the resulting functional layers, improving the quality of the electrochemical storage device.

In certain embodiments, the first functional layer, the second functional layer, the third functional layer and/or the at least one further functional layer forms a solid-state electrolyte of the electrochemical storage device.

In certain embodiments, the solid-state electrolyte comprises an inorganic solid electrolyte, e.g. a ceramic or glass material. Such an inorganic solid-state electrolyte may comprise lithium or sodium in its stoichiometric composition.

In certain embodiments, the inorganic solid electrolyte is selected from the group consisting of LiPON, LiI, $Li_3N$, Li-$\beta$"-$Al_2O_3$, $Li_{3x}La_{2/3-x}\square_{1/3-2x}TiO_3$ (LLTO, perovskite), $Li_3OCl$ (anti-perovskite), $Li_{14}ZnGe_4O_{16}$ (LiSICON), $Li_{1.3}Ti_{1.7}Al_{0.3}(PO_4)_3$ (NaSICON type), $Li_7La_3Zr_2O_{12}$ (garnet), Thio-LiSICON, $Li_6PS_5X$ (wherein X designates Cl, Br or I), argyrodites, and $Li_{10}MP_2S_{12}$, (wherein M designates Ge or Sn).

In certain embodiments, the solid-state electrolyte comprises a polymer electrolyte, wherein particularly the solid-state electrolyte comprises a mixture of a polymer and a metal ion salt, more particularly a lithium salt or a sodium salt.

In certain embodiments, the polymer electrolyte comprises a mixture of a polymer and a metal salt, a mixture of different polymers, a block-co polymer or a single ion conducting polymer electrolyte, particularly a lithium polymer salt.

In certain embodiments, the polymer electrolyte comprises a polyether, in particular polyethylene oxide (PEO) or polypropylene oxide (PPO), a polysiloxane, a polycarbonate, a polyester, a polynitrile, a polyalcohol, a polyamine or poly(bis-(methoxyethoxyethoxide)phosphazene (MEEP).

In certain embodiments, the polymer electrolyte comprises a metal ion salt, particularly $LiBF_4$, $LiClO_4$, $LiPF_6$, $LiAsF_6$, $LiCF_3SO_3$ (lithium trifluoromethanesulfonate (LiTf)), or $LiN(CF_3SO_2)_2$ (lithium bis (trifluoromethanesulfonyl)imide (LiTFSI)).

In certain embodiments, the polymer electrolyte comprises a metal ion salt, particularly $NaBF_4$, $NaClO_4$, $NaPF_6$, $NaAsF_6$, $NaCF_3SO_3$ (sodium trifluoromethanesulfonate), or $NaN(CF_3SO_2)_2$ (sodium bis (trifluoromethanesulfonyl)imide).

In certain embodiments, the polymer electrolyte comprises a mixture of a polymer and a metal salt, particularly a mixture of polyethyleneoxide and $LiBF_4$, a mixture of polyethyleneoxide and $LiClO_4$, a mixture of polyethyleneoxide and $LiPF_6$, a mixture of polyethyleneoxide and $LiAsF_6$, a mixture of polyethyleneoxide and $LiCF_3SO_3$, a mixture of polyethyleneoxide and $LiN(CF_3SO_2)_2$, a mixture of polypropyleneoxide and $LiClO_4$, a mixture of poly(bis-(methoxyethoxyethoxide)phosphazene and $LiCF_3SO_3$ or a mixture of a polysilicone and $LiN(CF_3SO_2)_2$.

In certain embodiments, the polymer electrolyte comprises a functional-group-to-charge-carrier ratio (e.g. Ethylene Oxide to Lithium) ratio from 5:1 to 50:1. In other words, the functional group of the polymer is 5 to 50 times more apparent than the metal ion of the salt which is the charge carrier.

In certain embodiments, the first preparation, the second preparation, the third preparation and/or the at least one further preparation comprises a polymer, particularly polyethyleneoxide (PEO), polyvinylidenfluorid (PVdF), polyacrylic acid (PAA), carboxymethylcellulose (CMC), styrenebutadiene rubber (SBR), poly(tetrafluoroethylene) (PTFE), polyethylene (PE), polystyrene (PS), polypropylene (PP), gelatin, starch, agar-agar, alginate, amylose, arabic gum, carrageenan, caseine, chitosan, (carbonyl-beta) cyclodextrines, ethylene propylene diene monomer rubber (EPDM), gellan gum, guar gum, karaya gum, cellulose, pectine, PEDOT-PSS, poly(methyl acrylate) (PMA), poly (vinyl alcohol) (PVA), poly (vinyl acetate) (PVAc), polyacrylonitrile (PAN), polyisoprene (PIpr), polyaniline (PANi), polyimide (PI), polyurethane (PU), polyvinyl butyral (PVB), polyvinyl pyrrolidone (PVP), tara gum, tragacanth gum, TRD202A or xanthan gum.

By adding polymers to the respective preparation, it is possible to provide a binder, tune the rheological properties of the preparation and particularly provide a solid ion conductor to obtain a solid-state electrolyte layer.

In certain embodiments, the first functional layer, the second functional layer, the third functional layer or the at least one further functional layer forms a cathode or an anode of the electrochemical storage device.

In certain embodiments, the first functional layer, the second functional layer, the third functional layer or the at least one further functional layer forms an electron transport medium, particularly a current collector, of the electrochemical storage device.

In certain embodiments, the first functional layer, the second functional layer, the third functional layer or the at least one further functional layer forms a protective layer of the electrochemical storage device. In certain embodiments, the protective layer is air-impermeable and/or water-impermeable, wherein particularly the protective layer is a top layer or a bottom layer of the stack of functional layers (i.e., the protective layer is coated onto the substrate as the first (bottom) functional layer or the last (top) functional layer). This advantageously protects the other functional layers from moisture and/or air, thereby preventing malfunctioning of the electrochemical storage device and improving its shelf-life.

In certain embodiments, the first preparation, the second preparation, the third preparation and/or the at least one further preparation comprises a solvent. This solvent particularly evaporates after formation of the respective functional layer resulting in an increased solid content of the electrochemical storage device.

In certain embodiments, the solvent comprises or consists of water, acetonitrile, N-methyl-2-pyrrolidone, an alcohol, particularly ethanol or methanol, or tetrahydrofuran.

In certain embodiments, the first preparation, the second preparation, the third preparation and/or the at least one further preparation comprises a polymerizable monomer, wherein particularly polymerization of the monomer is facilitated or initiated by metal ions. Alternatively, polymerization of the monomer can be initiated by electromagnetic radiation of a certain wavelength (e.g. photopolymerization) or by the addition of radicals (radical polymerization). The polymerizable monomer may serve as the solvent, particularly to suspend the particles to form a slurry, or the monomer may be provided in addition to a solvent. A preparation comprising a polymerizable monomer has the advantage that a subsequent solvent evaporation step may be omitted and replaced by a polymerization step which can significantly accelerate manufacture of the electrochemical storage device.

In certain embodiments, polymerization of the polymerizable monomer is initiated subsequently to forming the first functional layer, the second functional layer, the third functional layer and/or the at least one further functional layer on the coating surface of the substrate.

In certain embodiments, the first preparation, the second preparation, the third preparation and/or the at least one further preparation comprises a metal ion host, particularly a conversion material or intercalation material. In particular, a functional layer comprising such a metal ion host may serve as an anode or a cathode of the electrochemical storage device.

In certain embodiments, the metal ion host comprises or consists of a cathode active material, particularly lithium nickel manganese cobalt oxide (Li-NMC, e.g. $Li_aNi_xMn_yCo_zO_2$), lithium iron phosphate (LFP, $LiFePO_4$), lithium nickel cobalt aluminium oxide (Li-NCA, e.g. $Li_aNi_xCo_yAl_zO_z$,), lithium cobalt oxide (LCO, $LiCoO_2$), or lithium manganese oxide (LMO, $LiMn_2O_4$).

In certain embodiments, the metal ion host comprises or consists of an anode active material, particularly graphite, silicon, lithium titanate (LTO, $Li_4Ti_5O_{12}$) or titanium oxide ($TiO_2$).

In certain embodiments, the first preparation, the second preparation, the third preparation and/or the at least one further preparation comprises a precursor capable of forming a metal ion host, particularly a conversion material or intercalation material. The metal ion host may be formed from the precursor by a chemical reaction which is initiated or automatically occurs after forming the respective functional layer of the electrochemical storage device by curtain coating. For example, the precursor may be a nitrate, a carbonate or a hydroxide.

In certain embodiments, the first preparation, the second preparation, the third preparation and/or the at least one further preparation comprises a solid ion conductor, particularly comprising an inorganic material (e.g. a ceramic or glass material) or a polymer electrolyte.

In certain embodiments, the first preparation, the second preparation, the third preparation and/or the at least one further preparation comprises a precursor capable of forming a solid ion conductor, particularly comprising an inorganic material (e.g. a ceramic or glassy/amorphous material) or a polymer electrolyte. The solid ion conductor may be formed from the precursor by a chemical reaction which is initiated or automatically occurs after forming the respective functional layer of the electrochemical storage device by curtain coating. In case of a polymer electrolyte, this chemical reaction may be a polymerization reaction and the precursor may be a monomer capable of forming the polymer by polymerization. Alternatively, in particular, the precursor may be a nitrate, a carbonate or a hydroxide.

In certain embodiments, the first preparation, the second preparation, the third preparation and/or the at least one further preparation comprises a solid electronic conductor, particularly comprising a metal (e.g. aluminum or copper) or carbon (e.g. carbon black).

In certain embodiments, the solid electronic conductor comprises electrically conductive fibers, particularly carbon nanotubes. These electrically conductive fibers simultaneously serve as an electron conductor and improve the rheological properties (viscosity) of the preparation, resulting in improved stability of the curtain during coating.

In certain embodiments, the first preparation, the second preparation, the third preparation and/or the at least one further preparation comprises a surfactant.

In certain embodiments, the first functional layer forms a cathode or an anode and the second functional layer forms a solid-state electrolyte of the electrochemical storage device.

In certain embodiments, the first preparation, the second preparation, the third preparation and/or the at least one further preparation comprises a low-shear viscosity of 1 mPa s to 100000 mPa s, particularly 100 mPa s to 1000 mPa s.

In certain embodiments, the first preparation, the second preparation, the third preparation and/or the at least one further preparation comprises lithium ions or sodium ions.

In certain embodiments, the first preparation, the second preparation, the third preparation and/or the at least one further preparation comprises a liquid metal, particularly liquid lithium, liquid gallium, or a mixture of liquid lithium and liquid gallium (resulting in an alloy), or metal particles (particularly resulting in a metal paste). Advantageously, lithium and gallium have a relatively low melting temperature which facilitates manufacturing. The metal particularly forms an electronic conductor, such as a current collector, as well as a host for metal ions (e.g. wherein the ions form a deposit on the metal layer). Forming a current collector by the method according to the present invention has the advantage that a very thin (e.g. 5 $\mu$m or less) current collector layer can be formed in contrast to method of the prior art, resulting in improved quality of the electrochemical storage device. In case of a combined current collector and metal ion host, the thickness of the electrochemical storage device can be further reduced.

In certain embodiments, the first preparation, the second preparation, the third preparation and/or the at least one further preparation comprises a liquid metal, particularly liquid lithium, liquid gallium or a mixture of liquid lithium and liquid gallium, wherein the preparation is heated prior to and/or during dispensing onto the coating surface of the substrate.

In certain embodiments, the first preparation, the second preparation, the third preparation and/or the at least one further preparation comprises a first polymer having a molecular weight from 1000 g mol$^{-1}$ to 100000 g mol$^{-1}$ and a second polymer having a molecular weight from 300000 g mol$^{-1}$ to 1200000 g mol$^{-1}$. In particular, this bimodal size distribution allows to obtain optimal rheological properties and at the same time provides optimal conditions for a polymer electrolyte of a solid-state electrochemical storage device. It also allows higher solid contents of the preparations and therefore shorter drying times.

In certain embodiments, the coating device, particularly the coating head or the nozzle, comprises a dispensing surface configured to receive the first and the second preparation (and optionally the third and/or the at least one further preparation) dispensed from the first and the second slot (and optionally the third and/or the at least one further slot) of the coating device, particularly wherein the first preparation and the second preparation (and optionally the third preparation and the at least one further preparation) form layers on top of each other on the dispensing surface, wherein the layers form a layered curtain between the coating device and the coating surface of the substrate.

In certain embodiments, the first reservoir and the first slot, the second reservoir and the second slot, the third reservoir and the third slot and/or the at least one further reservoir and the at least one further slot are divided into a first section and a second section along the lateral axis, wherein the first section and the second section are physically separated, preventing flow of the respective preparation between the first and the second section. In particular, the first section forms an end section of the respective reservoir along the lateral axis.

In certain embodiments, the first reservoir and the first slot, the second reservoir and the second slot, the third reservoir and the third slot and/or the at least one further reservoir and the at least one further slot further comprise a third section which is physically separated from the first section and the second section, wherein particularly the second section is arranged between the first section and the third section, wherein the first section and the second section form opposite end sections of the respective reservoir along the lateral axis.

For example, physical separation between the sections may be obtained by integral walls of the coating head or nozzle separating the sections of the respective reservoir, by placing separate manifolds in the respective sections of a recess in the coating head or nozzle or by inserting separators into the respective reservoir.

In certain embodiments, the first, the second, the third or the at least one further preparation is provided in the first section of the respective reservoir at a first flow rate and the second preparation is provided in the second section of the respective reservoir at a second flow rate, such that the functional layer formed by the respective preparation dispensed from the first section of the respective slot comprises a greater thickness perpendicular to the coating surface than the functional layer formed by the respective preparation dispensed from the second section of the respective slot, particularly wherein the first flow rate is greater than the second flow rate.

In certain embodiments, the dispensing surface comprises a recess comprising a width along the lateral axis corresponding to the width of the first section of the respective reservoir and the respective slot, wherein particularly the recess extends from the respective slot along the entire dispensing surface in the coating direction. In particular, a depth of the recess perpendicular to the dispensing surface corresponds to the thickness difference between the functional layer formed by the respective preparation dispensed from the first section and the functional layer formed by the respective preparation dispensed from the second section.

In certain embodiments, the first, the second, the third or the at least one further preparation is provided in the third section of the respective reservoir at a third flow rate, such that the functional layer formed by the respective preparation dispensed from the third section of the respective slot comprises a greater thickness perpendicular to the coating surface than the functional layer formed by the respective preparation dispensed from the second section of the respective slot, wherein particularly the third flow rate is equal to the first flow rate and the thickness of the functional layer formed by the respective preparation dispensed from the third section is equal to the thickness of the functional layer formed by the respective preparation dispensed from the first section.

In certain embodiments, the dispensing surface comprises a recess comprising a width along the lateral axis corresponding to the width of the third section of the respective reservoir and the respective slot, wherein particularly the recess extends from the respective slot along the entire dispensing surface in the coating direction. In particular, a depth of the recess perpendicular to the dispensing surface corresponds to the thickness difference between the functional layer formed by the respective preparation dispensed from the third section and the functional layer formed by the respective preparation dispensed from the second section.

In certain embodiments, the second preparation is provided in the first section at a first flow rate and the second preparation is provided in the second section at a second flow rate, such that the second functional layer formed by the second preparation dispensed from the first section of the second slot comprises a greater thickness perpendicular to the coating surface than the second functional layer formed by the second preparation dispensed from the second section of the second slot. In particular, the first slot comprises a width extending along the lateral axis which is equal to the width of the second section of the second slot, particularly such that the first functional layer formed by the first preparation is embedded by the second functional layer formed by the second preparation.

In certain embodiments, the second preparation is provided in the third section of the second reservoir at a third flow rate, such that the functional layer formed by the second preparation dispensed from the third section of the second slot comprises a greater thickness perpendicular to the coating surface than the functional layer formed by the second preparation dispensed from the second section of the second slot, wherein particularly the third flow rate is equal to the first flow rate and the thickness of the functional layer formed by the second preparation dispensed from the third section is equal to the thickness of the functional layer formed by the second preparation dispensed from the first section.

Providing the preparations in the different sections of the respective reservoir at different flow rates as described above, can be used to laterally embed an adjacent functional layer applied through a separate slot or form interconnections between functional layers, particularly if this slot comprises a width which is equal to the width of the second (middle) section. The flow rate necessary to obtain a pre-defined thickness depends on the width of the slot along the lateral axis. By means of the optional recess in the dispensing surface corresponding to the width of the first and/or third section, a lower functional layer can be embedded by an upper functional layer while maintaining a plain surface of the upper layer, which is advantageous for deposition of further layers on the upper layer.

In certain embodiments, the first or second preparation is dispensed from the first section and a further preparation is dispensed from the second section, such that the first or second preparation and the further preparation are arranged in a pre-defined pattern on the coating surface of the substrate to jointly form the first or second functional layer of the electrochemical storage device.

For instance, this may be applied to laterally embed a solid electrolyte of a solid electrolyte battery e.g. by a layer of active material (anode or cathode) or by a protective layer or to form interconnections between layers in a single manufacturing step.

Of course, the reservoirs and associated slots can be divided into additional sections (besides the first, the second and the third section) to obtain certain patterns of the functional layers and allow interconnection between layers.

In certain embodiments, the functional layers are chemically, thermally, optically, or mechanically excited to change the composition and/or the structure of the functional layers.

In certain embodiments, the first preparation, the second preparation, the third preparation and/or the at least one further preparation comprises a solvent, wherein the solvent is evaporated subsequently to forming the functional layers on the coating surface of the substrate.

In certain embodiments, the functional layers are dried subsequently to forming the functional layers on the coating surface of the substrate.

In certain embodiments, the functional layers are exposed to an electric field and/or a magnetic field during drying the functional layers. In particular, this results in the formation of a conductivity network in a solid electrolyte functional layer (e.g. by formation of lithium ion channels) with a defined morphology and directionality, which improves the quality of the electrochemical storage device.

In certain embodiments, at least two adjacent functional layers are cross-linked subsequently to forming the functional layers on the coating surface of the substrate. In other words, the interface of the adjacent layers is linked by a chemical reaction between the chemical groups of the layers resulting in increased mechanical stability, and particularly less subsequent chemical reactions between the layers and/or improved ion conductivity through the interface of the layers.

In certain embodiments, pressure and/or heat are applied to the functional layers subsequently to forming the functional layers on the coating surface of the substrate.

In certain embodiments, the functional layers are calendered subsequently to forming the functional layers on the coating surface of the substrate. Calendering can be permormed by passing the stack of functional layers between two rollers separated by a small gap with or without additional heating, resulting in compaction of the layers.

In certain embodiments, a chemical reaction occurs in at least one of the functional layers subsequently to forming the functional layers on the coating surface of the substrate, wherein particularly the chemical reaction involves polymerization of the monomer, forming a metal ion host from a precursor, forming a solid ion conductor from a precursor, or forming a solid electronic conductor from a precursor.

In certain embodiments, the functional layers are sintered subsequently to forming the functional layers on the coating surface of the substrate, particularly by applying heat, radiation (e.g. infrared radiation, light, for instance laser light or microwaves).

In certain embodiments, the substrate is removed from the functional layers subsequently to forming the functional layers on the coating surface of the substrate. In other words, the substrate is used as a sacrificial layer, which is delaminated or otherwise removed after curtain coating the functional layers of the electrochemical storage device. This has the advantage that the overall weight of the electrochemical storage device is reduced. Furthermore, removing the rigid substrate allows to adapt the shape of the functional layer stack of the electrochemical storage device, or even realize a flexible electrochemical storage device depending on the used components of the functional layers, for example to integrate the electrochemical storage device in textiles or wearable devices.

In certain embodiments, the first preparation, the second preparation, the third preparation or the at least one further preparation comprises a polymer, wherein the first preparation and/or the second preparation is dispensed onto the coating surface of the substrate at a temperature above the melting point of the polymer. Therein, in particular, the first preparation, the second preparation, the third preparation and/or the at least one further preparation does not contain a solvent. Using such a solvent-free preparation, a functional layer with a high solid content can be formed by cooling (resulting in solidification of the polymer) instead of evaporating the solvent, which improves the speed of the manufacturing method.

A second aspect of the invention relates to a coating device for generating functional layers of an electrochemical storage device comprising

- a first reservoir for receiving a first preparation,

- a first slot for dispensing the first preparation from the first reservoir onto a coating surface of a substrate, such that the first preparation forms a curtain between the coating device and the substrate during dispensing the first preparation onto the coating surface,

- a second reservoir for receiving a second preparation,

- a second slot extending parallel to the first slot for dispensing the second preparation from the second reservoir onto the coating surface simultaneously to the first preparation, such that the second preparation forms a curtain between the coating device and the coating surface during dispensing the second preparation onto the coating surface,

- wherein the coating device is configured to be placed above the substrate and moved relative to the substrate along a coating direction.

In certain embodiments, the first slot and the second slot are configured and arranged such that a first functional layer of the electrochemical storage device can be formed on the coating surface from the first preparation, and a second functional layer of the electrochemical storage device can be formed simultaneously (with the first functional layer) on the first functional layer from the second preparation.

In certain embodiments, the coating device comprises a third reservoir for receiving a third preparation, a third slot for dispensing the third preparation from the third reservoir onto the coating surface of the substrate, such that the third preparation forms a curtain between the coating device and the substrate during dispensing the third preparation onto the coating surface, particularly wherein the third slot is configured and arranged such that a third functional layer of the electrochemical storage device can be formed simultaneously with the first and second functional layer on the second functional layer.

In certain embodiments, the coating device comprises at least one further reservoir for receiving a further preparation, at least one further slot for dispensing the further preparation from the further reservoir onto the coating surface of the substrate, such that the further preparation forms a curtain between the coating device and the substrate during dispensing the further preparation onto the coating surface, particularly wherein the at least one further slot is configured and arranged such that a further functional layer of the electrochemical storage device can be formed simultaneously with the first, the second (and optionally the third) functional layer, more particularly on the third functional layer.

In certain embodiments, the coating device, particularly the coating head or the nozzle, comprises a dispensing surface configured to receive the first and the second preparation (and optionally the third and/or the at least one further preparation) dispensed from the first and the second slot (and optionally the third and/or the at least one further slot) of the coating device, particularly wherein the dispensing surface is arrangeable such that the first preparation and the second preparation (and optionally the third preparation and the at least one further preparation) form layers on top of each other on the dispensing surface and that the layers form a layered curtain between the coating device and the coating surface of the substrate. In this manner, it is possible to generate the functional layers simultaneously.

In particular, the coating device may comprise a coating head or nozzle comprising at least the first slot, the second slot, the third slot and/or the at least one further slot and optionally also the first reservoir, the second reservoir, the third reservoir and/or the at least one further reservoir (alternatively, the first, the second, the third and/or the at least one further reservoir may be disposed outside of the coating head or nozzle and in fluid connection with the respective first, second, third or further slot). For example, the first, the second, the third and/or the at least one further reservoir may be formed by a cavity in the coating head or nozzle or by a manifold that is insertable in a cavity of the coating head or nozzle. The first preparation, the second preparation, the third preparation and/or the fourth preparation may be provided in the respective first, second, third or further reservoir by pumps which transport the respective preparation from a separate storage reservoir into the respective reservoir of the coating device, e.g. via a tubing or conduit.

In certain embodiments, the coating device comprises edge guides configured to prevent neck formation of the curtain between the coating device and the coating surface of the substrate. Therein, thinning of the curtain along the lateral axis as a result of surface tension is termed 'neck formation'. In particular, the edge guides comprise or consist of tabs or plates extending from both lateral ends of the dispensing surface in a vertical direction towards the coating surface.

In certain embodiments, the coating device comprises a conveyor mechanism, e.g. a conveyor belt, configured to move the substrate (e.g. in the form of a film or web) relative to the coating device, particularly relative to the coating head or nozzle, against the coating direction, wherein the coating device, particularly the coating head or nozzle, remains stationary. In particular, in case the substrate is a web, a film or a foil, the substrate can be moved itself without an additional conveyor belt.

In certain embodiments, the coating device comprises an actuator configured to move the coating head or nozzle relative to the substrate along the coating direction.

In certain embodiments, the first reservoir, the second reservoir, the third reservoir and/or the further reservoir comprises a respective pump inlet for connecting a pump to the respective reservoir, such that a preparation may be provided in the respective reservoir by means of the pump. The pump inlets of the first, second, third and/or further reservoir may be connected to the same pump or separate pumps.

In certain embodiments, the coating device comprises at least one pump connected to the pump inlet of the first reservoir, the second reservoir, the third reservoir and/or the further reservoir.

In certain embodiments, the first reservoir (and also the first slot), the second reservoir (and also the second slot), the third reservoir (and also the third slot) and/or the further reservoir (and also the further slot) are divided into a (respective) first section and a (respective) second section along the lateral axis, wherein the first section and the second section are physically separated. Therein, in particular, the first reservoir, the second reservoir, the third reservoir and/or the at least one further reservoir comprises a first pump inlet connected to the first section and a second pump inlet connected to the second section, wherein the first pump inlet and the second pump inlet are configured to be connected to respective pumps to provide respective preparations in the first section and the second section. In particular, the first section forms a first end section of the first, second, third or further reservoir along the lateral axis. In other words, the first section is limited by a wall forming an end of the respective first, second, third or further reservoir along the lateral axis.

In certain embodiments, the first reservoir, the second reservoir, the third reservoir and/or the further reservoir comprises a third section, wherein the second section is arranged between the first section and the third section along the lateral axis. In particular, the third section forms a second end section of the respective reservoir opposite the first end section. In particular, the respective reservoir comprises a third pump inlet connected to the third section.

In certain embodiments, the first section and/or the third section of the second slot extends beyond the first slot along the lateral axis, such that the second functional layer can be formed laterally with respect of the first functional layer, in particular thereby embedding the first functional layer. In other words, the second slot has a greater width than the first slot.

In certain embodiments, the coating device comprises a first pump connected to the first pump inlet, which is connected to the first section of the first, the second, the third and/or the at least one further reservoir and a second pump connected to the second pump inlet, which is connected to the second section of the first, the second, the third and/or the at least one further reservoir. In particular, the coating device comprises a third pump connected to the third pump inlet which is connected to the third section of the first, the second, the third and/or the at least one further reservoir.

Using this setup, different preparations can be provided in the sections of the reservoirs and dispensed from the associated slot sections to obtain a functional layer comprising a pre-defined pattern of materials, e.g. embedding certain layers or forming interconnections between layers.

In certain embodiments, the coating device comprises a pump controller configured to set a first flow rate of the first pump and a second flow rate of the second pump, particularly such that the functional layer formed by the respective preparation dispensed from the first section of the respective slot comprises a greater thickness perpendicular to the coating surface than the functional layer formed by the preparation, particularly the second preparation, dispensed from the second section of the respective slot.

In certain embodiments, the dispensing surface comprises a recess comprising a width along the lateral axis corresponding to the width of the first section of the respective reservoir and the respective slot, wherein particularly the recess extends from the respective slot along the entire dispensing surface in the coating direction. This allows to obtain an upper functional layer embedding a lower functional layer while maintaining a plain surface of the upper functional layer in case the depth of the recess corresponds to the difference in thickness of the functional layer dispensed from the first section of the respective slot and the functional layer dispensed from the second section of the respective slot.

In certain embodiments, the coating device further comprises a third pump connected to the third pump inlet connected to the third section of the first, the second, the third and/or the at least one further reservoir, wherein the pump controller is configured to set a third flow rate of the third pump, particularly such that the functional layer formed by the respective preparation dispensed from the third section of the respective slot comprises a greater thickness perpendicular to the coating surface than the functional layer formed by the preparation dispensed from the second section of the respective slot, wherein particularly the third flow rate is equal to the first flow rate. Alternatively, in certain embodiments, the first pump is further connected to the third pump inlet connected to the third section of the first, the second, the third or the at least one further reservoir (in addition to the first pump inlet connected to the first section), particularly such that the functional layers formed by the preparation dispensed from the first section and the third section comprise the same thickness.

In certain embodiments, the dispensing surface comprises a recess comprising a width along the lateral axis corresponding to the width of the third section of the respective reservoir and the respective slot, wherein particularly the recess extends from the respective slot along the entire dispensing surface in the coating direction. This allows to obtain an upper functional layer embedding a lower functional layer while maintaining a plain surface of the upper functional layer in case the depth of the recess corresponds to the difference in thickness of the functional layer dispensed from the third section of the respective slot and the functional layer dispensed from the second section of the respective slot.

In certain embodiments, the coating device comprises a first pump connected to the first pump inlet, which is connected to the first section of the second reservoir and a second pump connected to the second pump inlet, which is connected to the second section of the second reservoir, wherein the coating device comprises a pump controller configured to set a first flow rate of the first pump and a second flow rate of the second pump, such that the functional layer formed by the second preparation dispensed from the first section of the respective slot comprises a greater thickness perpendicular to the coating surface than the functional layer formed by the second preparation dispensed from the second section, wherein particularly the first slot comprises a width extending along the lateral axis which is equal to the width of the second section of the second slot, particularly such that the first functional layer formed by the first preparation is embedded by the second functional layer formed by the second preparation.

The above-described embodiments with a divided reservoir (and slot) allow to apply different preparations in one functional layer of the electrochemical storage device in a pre-defined pattern. For instance, this may be applied to laterally embed a solid electrolyte of a solid electrolyte battery e.g. by a layer of active material (anode or cathode) or by a protective layer or form interconnections between two layers which are separated by a further layer in a single manufacturing step. Alternatively, it is possible to apply the preparations from the different sections at different flow rates. For example, a higher flow rate may be applied in the outer (first and/or third) section(s) of the respective reservoir) than in the middle (second) section. This can be used to laterally embed a previous functional layer applied through a separate slot, particularly if this slot comprises a width which is equal to the width of the second (middle) section.

A third aspect of the invention relates to a preparation (i.e., the first, the second, the third or the at least one further preparation mentioned above) for forming a functional layer of an electrochemical storage device.

In certain embodiments, the preparation exhibits a shear thinning behavior, i.e., a drop of viscosity at increasing shear rates.

In certain embodiments, the preparation is a liquid or a slurry.

In certain embodiments, the preparation comprises a solvent.

In certain embodiments, the preparation comprises a polymerizable monomer, wherein particularly polymerization of the monomer is initiated or facilitated by metal ions, more particularly lithium ions. Alternatively, polymerization of the monomer can be initiated by electromagnetic radiation of a certain wavelength (e.g. photopolymerization) or by the addition of radicals (radical polymerization).

In certain embodiments, the preparation comprises a metal ion host or a precursor capable of forming a metal ion host, particularly a conversion material or intercalation material.

In certain embodiments, the preparation comprises a solid ion conductor or a precursor capable of forming a solid ion conductor, particularly comprising an inorganic material comprising metal ions, more particularly lithium ions or sodium ions.

In certain embodiments, the preparation comprises a solid electronic conductor or a precursor capable of forming a solid electronic conductor particularly comprising a metal or carbon,

In certain embodiments, the preparation comprises a low-shear viscosity of 1 mPa s to 100000 mPa s, particularly 100 mPa s to 1000 mPa s, such that the preparation is capable of forming a curtain between a coating device and a coating surface of a substrate when the preparation is dispensed from a slot of the coating device onto the coating surface.

In certain embodiments, the preparation comprises a first polymer having a molecular weight from 1000 g mol$^{-1}$ to 100000 g mol$^{-1}$ and a second polymer having a molecular weight from 300000 g mol$^{-1}$ to 1200000 g mol$^{-1}$. In particular, this bimodal size distribution allows to obtain optimal rheological properties and at the same time provide optimal conditions for a polymer electrolyte of a solid-state electrochemical storage device. It also allows higher solid contents of the preparations and therefore shorter drying times.

In certain embodiments, the preparation comprises a polymer, particularly polyethyleneoxide (PEO), polyvinylidenfluorid (PVdF), polyacrylic acid (PAA), carboxymethylcellulose (CMC), styrenebutadiene rubber (SBR), poly(tetrafluoroethylene) (PTFE), polyethylene (PE), polystyrene (PS), polypropylene (PP), gelatin, starch, agar-agar, alginate, amylose, arabic gum, carrageenan, caseine, chitosan, (carbonyl-beta) cyclodextrines, ethylene propylene diene monomer rubber (EPDM), gellan gum, guar gum, karaya gum, cellulose, pectine, PEDOT-PSS, poly(methyl acrylate) (PMA), poly (vinyl alcohol) (PVA), poly (vinyl acetate) (PVAc), polyacrylonitrile (PAN), polyisoprene (Plpr), polyaniline (PANi), polyimide (PI), polyurethane (PU), polyvinyl butyral (PVB), polyvinyl pyrrolidone (PVP), tara gum, tragacanth gum, TRD202A or xanthan gum.

By adding polymers to the preparation, it is possible to provide a binder, tune the rheological properties of the preparation and particularly also provide a solid ion conductor to obtain a solid-state electrolyte layer.

In certain embodiments, the preparation comprises a solvent. This solvent particularly evaporates after formation of the respective functional layer resulting in an increased solid content of the electrochemical storage device. In certain embodiments, the solvent comprises or consists of water, acetonitrile, N-methyl-2-pyrrolidone, an alcohol, particularly ethanol or methanol, or tetrahydrofuran.

In certain embodiments, the preparation comprises a polymerizable monomer, wherein particularly polymerization of the monomer is facilitated or initiated by metal ions. The polymerizable monomer may serve as the solvent, particularly to suspend the particles to form a slurry, or the monomer may be provided in addition to a solvent. A preparation comprising a polymerizable monomer has the advantage that a subsequent solvent evaporation step may be omitted and replaced by a polymerization step which can significantly accelerate manufacture of the electrochemical storage device.

In certain embodiments, the preparation comprises a metal ion host, particularly a conversion material or intercalation material. In particular, a functional layer comprising such a metal ion host may serve as an anode or a cathode of the electrochemical storage device.

In certain embodiments, the metal ion host comprises or consists of a cathode active material, particularly lithium nickel manganese cobalt oxide (Li-NMC, e.g. $Li_aNi_xMn_yCo_zO_2$), lithium iron phosphate (LFP, $LiFePO_4$), nickel cobalt aluminium oxide (Li-NCA, e.g. $Li_aNi_xCo_yAl_zO_z$), lithium cobalt oxide (LCO, $LiCoO_2$), or lithium manganese oxide (LMO, $LiMn_2O_4$).

In certain embodiments, the metal ion host comprises or consists of an anode active material, particularly graphite, silicon, lithium titanate (LTO, $Li_4Ti_5O_{12}$) or titanium oxide ($TiO_2$).

In certain embodiments, the preparation comprises a precursor capable of forming a metal ion host, particularly a conversion material or intercalation material. The metal ion host may be formed from the precursor by a chemical reaction which is initiated or automatically occurs after forming the respective functional layer of the electrochemical storage device by curtain coating. For example, the precursor may be a nitrate, a carbonate or a hydroxide.

In certain embodiments, the preparation comprises a solid ion conductor, particularly comprising an inorganic material (e.g. a ceramic or glass material) or a polymer electrolyte.

In certain embodiments, the preparation comprises a precursor capable of forming a solid ion conductor, particularly comprising an inorganic material (e.g. a ceramic or glass material) or a polymer electrolyte. The solid ion conductor may be formed from the precursor by a chemical reaction which is initiated or automatically occurs after forming the respective functional layer of the electrochemical storage device by curtain coating. In case of a polymer electrolyte, this chemical reaction may be a polymerization reaction and the precursor may be a monomer capable of forming the polymer by polymerization. Alternatively, in particular, the precursor may be a nitrate, a carbonate or a hydroxide.

In certain embodiments, the preparation comprises a solid electronic conductor, particularly comprising a metal (e.g. aluminum or copper) or carbon (e.g. carbon black). In certain embodiments, the solid electronic conductor comprises electrically conductive fibers, particularly carbon nanotubes. These electrically conductive fibers simultaneously serve as an electron conductor and improve the rheological properties (viscosity) of the preparation, resulting in improved stability of the curtain during coating.

In certain embodiments, the preparation comprises a surfactant.

In certain embodiments, the preparation comprises lithium ions or sodium ions.

In certain embodiments, the preparation comprises a liquid metal, particularly liquid lithium, liquid gallium or a mixture of liquid lithium and liquid gallium, or metal particles (particularly resulting in a metal paste). The metal particularly forms an electronic conductor, such as a current collector. Forming a current collector by the method according to the present invention has the advantage that a very thin (e.g. 30 $\mu$m or less, particularly 5 $\mu$m or less) current collector layer can be formed in contrast to method of the prior art, resulting in improved quality of the electrochemical storage device.

Wherever alternatives for single separable features are laid out herein as "embodiments", it is to be understood that such alternatives may be combined freely to form discrete embodiments of the invention disclosed herein.

The invention is further illustrated by the following examples and figures, from which further embodiments and advantages can be drawn. These examples are meant to illustrate the invention but not to limit its scope.

Fig. 1    shows a cross-sectional view of a part of a coating device according to an embodiment of the invention in a plane parallel to the coating direction;

Fig. 2    shows a schematic partially cut-away perspective view of a part of a coating device according to an embodiment of the invention and the curtain and functional layers formed during the method according to the invention;

Fig. 3    shows a schematic perspective view of a coating device according to an embodiment of the invention with divided manifolds and associated pump inlets;

Fig. 4    shows a schematic perspective view of a coating device according to an embodiment of the invention and the curtain and functional layers formed during a first embodiment of the method according to the invention;

Fig. 5    shows a sectional view of the functional layers perpendicular to the coating direction, the functional layers having been formed according to the embodiment of the method depicted in Fig. 4;

Fig. 6    shows a schematic perspective view of a coating device according to an embodiment of the invention and the curtain and functional layers formed during a second embodiment of the method according to the invention;

Fig. 7    shows a sectional view of the functional layers perpendicular to the coating direction, the functional layers having been formed according to the embodiment of the method depicted in Fig. 6.

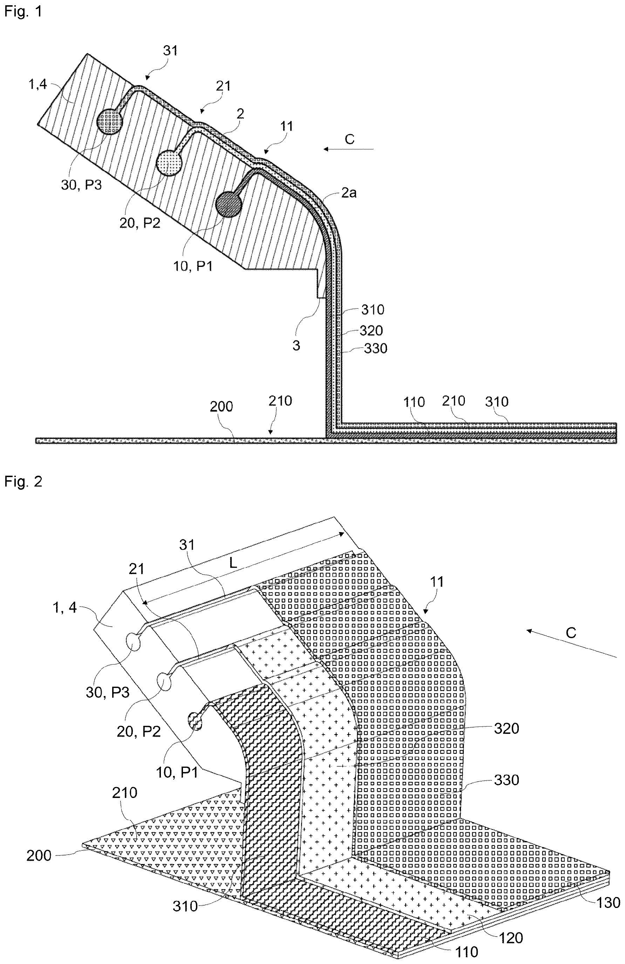

Fig. 1 shows a cross-sectional view of a coating head 4 of a coating device 1 according to an embodiment of the invention in a plane parallel to a coating direction C, and Fig. 2 shows a corresponding perspective view of the coating head 4. As shown in Fig. 1 and 2, the coating head 4 comprises a first reservoir 10, a second reservoir 20 and a third reservoir 30 for respectively receiving a first preparation P1, a second preparation P2 and a third preparation P3. In the depicted example, the reservoirs 10, 20, 30 are formed by cylindrical cavities in a main body of the coating head 4, the cavities extending along a lateral axis L which is to be arranged perpendicular to the coating direction C when performing the method according to the invention. The reservoirs 10, 20, 30 each branch into an associated slot 11, 21, 31 in a dispensing surface 2 or slide of the coating head 4. The dispensing surface 2 comprises a convexly curved section 2a at which a lip 3 is arranged which forms the bottom end of the coating head 4 in the arrangement shown in Fig. 1 and 2.

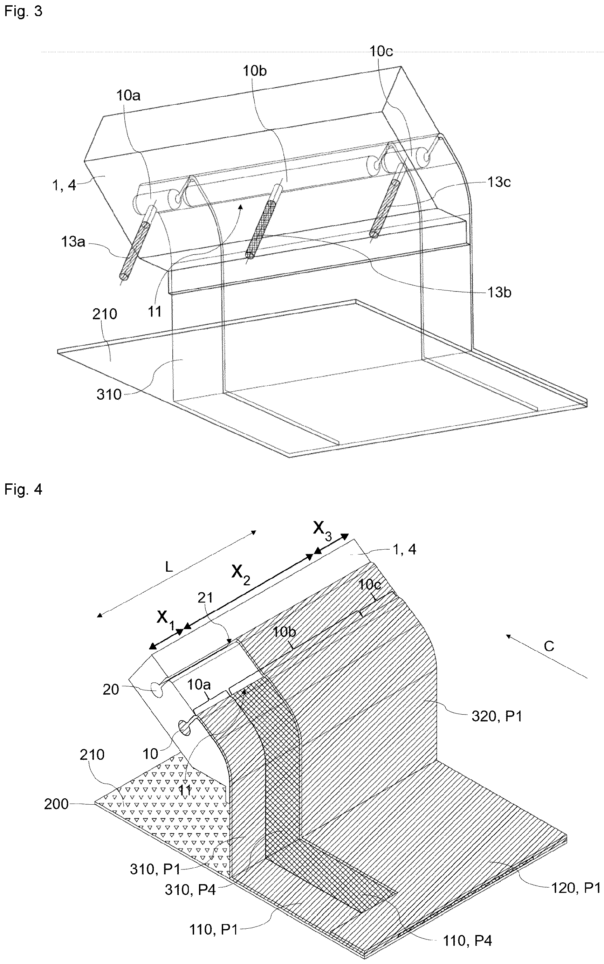

According to an embodiment of the curtain coating method according to the invention, a first preparation P1 is provided in the first reservoir 10, a second preparation P2 is provided in the second reservoir 20 and a third preparation P3 is provided in the third reservoir 30 through respective pump inlets (not shown in Fig. 1, e.g. see Fig. 3) in the reservoirs 10, 20, 30, which are connected to a respective pump (not shown). By generating a flow of the respective preparations P1, P2, P3, the preparations P1, P2, P3 are dispensed from the slots 11, 21, 31, and, due to the tilted arrangement of the coating head 4 flow downwards on the dispensing surface 2 towards the curved section 2 a and the lip 3.

At the position of the first slot 11, the second preparation P2 forms a layer on top of the first preparation P1 being dispensed from the first slot 11. In a similar manner at the position of the second slot 21, the third preparation P3 forms a layer on the second preparation P2 being dispensed from the second slot 21. Provided that the composition and the rheological properties of the first preparation P1, the second preparation P2, and the third preparation P3 are set accordingly, and that a laminar flow occurs, these layers formed on top of the dispensing surface 2 are not mixed and form a layered curtain composed of a first segment 310 from the first preparation P1, a second segment 320 from the second preparation P2 and a third segment 330 from the third preparation P3, the curtain flowing down from the lip 3 of the coating head 4 onto a coating surface 210 of a substrate 200.

The substrate 200 is moved against the coating direction C relative to the coating head 4, for instance by a conveyor mechanism. Thereby, the functional layers 110, 120, 130 are formed on top of each other on the coating surface 210.

In particular, the first preparation P1, the second preparation P2 and the third preparation P3 are slurries having appropriate rheological properties (i.e. an appropriate viscosity and preferably shear thinning behavior) to be used for curtain coating. To obtain a stable curtain, the flow rate of the preparations P1, P2, P3 as well as the coating speed at which the substrate 200 moves relative to the coating head 4 against the coating direction C have to be appropriately set.

In particular, the coating head 4 comprises edge guides formed by tabs extending from both lateral edges of the lip 3 towards the coating surface 210 in the vertical direction (not shown) to guide the edges of the curtain 310, 320, 330 and prevent neck formation.

The functional layers 110, 120, 130 of the electrochemical storage device may be, for example, a cathode 110, a solid-state electrolyte 120 and an anode 130 of a solid-state metal ion battery, e.g., a solid-state lithium ion battery or a solid-state sodium ion battery. According to this example, the first preparation P1 contains a metal ion host (conversion or intercalation material) suitable for forming a cathode of a solid-state ion battery, e.g. NMC, LFP, NCA, LCO, or LMO). The second preparation P2 contains a solid ion conductor, for instance an inorganic matrix containing metal ions, a polymer electrolyte such as a mixture of a polymer and a metal ion salt, or a mixture of an inorganic matrix containing metal salt and a polymer electrolyte. The third preparation P3 contains a metal ion host suitable for forming an anode of the solid-state ion battery, such as graphite, silicon, LTO or $TiO_2$.

Alternatively, to form a solid electronic conductor, such as a current collector layer, the dispensed preparation may, e.g., contain metals or carbon black.

To tune the rheological properties of the first preparation P1, the second preparation P2 and the third preparation P3, these preparations may contain polymers, particularly a mixture of two polymers of different molecular weights.

In addition, the preparations P1, P2, P3 may contain solvents or polymerizable monomers, and optionally surfactants.

The described curtain coating method has the advantage that several very thin (e.g. < 30 $\mu$m) layers of an electrochemical storage device can be formed simultaneously at high coating speeds (e.g., 40 m/min to 2500 m/min), which significantly improves manufacturing times of electrochemical storage devices, such as solid-state ion batteries.

An exemplary protocol for generating a slurry preparation according to the invention to form a solid electrolyte layer is as follows: 2.67g of PEO ($M_v$ 600 000) are dissolved in 77g Acetonitrile. 1.67g of LiTFSI are added and stirred with a spatula. 12g of LLZO powder ($d_{mean}$ 400nm) is added and stirred again with a spatula. These mass ratios are particularly chosen to result in approximately even volumetric parts of ceramic and polymer within the dried films. The EO:Li molar ratio is 10.4 : 1. The total solid content of the slurry is 17.5wt% ($m_{PEO}$ + $m_{LiTFSI}$ + $m_{LLZO}$)/$m_{total}$. The low shear steady state viscosity is around 130mPas.

Furthermore, an exemplary protocol for generating a slurry preparation according to the invention to form a cathode layer is as follows: 6g Acetonitrile, 0.25g PEO ($M_v$ 35 000), 0.167g PEO ($M_v$ 600 000), 0.27g LiTFSI, 1.1g LFP (Host) ($d_{mean}$ 1 micron), 0.1375 carbon black (60nm).

Following curtain coating, a number of post processing steps may be performed on the stack of functional layers, particularly the following steps:

1) Evaporation of the solvent

2) Drying

3) cross-linking

4) hot-pressing

5) calendaring

6) initiating chemical reactions between components of the functional layers

7) sintering

8) initiating further chemical reactions between components of the functional layers

9) pressuring

Fig. 3 to 7 show further examples of the coating device 1 and the curtain coating method according to the invention which can be advantageously used to generate structured functional layers 110, 120, 130 of an electrochemical storage device.

Fig. 3 is a semitransparent perspective view of a coating head 4, where only one reservoir 10 and the associated slot 11 has been drawn for simplicity (however, this arrangement can be used in coating heads containing three or even more reservoirs and slots). In the embodiment according to Fig. 3, the reservoir 10 is formed by three physically separated manifolds, resulting in a first section 10a, a second section 10b and a third section 10c, which are arranged along the lateral axis L, the second section 10b forming a middle section, and the first section 10a and the third section 10c forming opposite end sections. The first section 10a comprises a first pump inlet 13a, the second section 10b comprises a second pump inlet 13b and the third section 10c comprises a third pump inlet 13c, each being configured to be connected to a pump, such that a respective preparation P1, P2, P3, P4 can be provided in the respective section 10a, 10b, 10c of the reservoir 10.

In Fig. 4, a coating head 4 is depicted, wherein the first reservoir 10 is divided into a first section 10a (extending along the lateral axis over the width $X_1$), a second section 10b (extending along the lateral axis L over the width $X_2$) and a third section 10c (extending along the lateral axis L over the width $X_3$) similar to Fig. 3.

A first preparation P1 is dispensed from the first section 10a and the third section 10c of the first slot 11, and a further preparation P4 is simultaneously dispensed from the second section 10b of the first slot 11. Further, simultaneously, the first preparation P1 is dispensed from the second slot 21 over the whole width $X_1 + X_2 + X_3$ of the second slot 21.

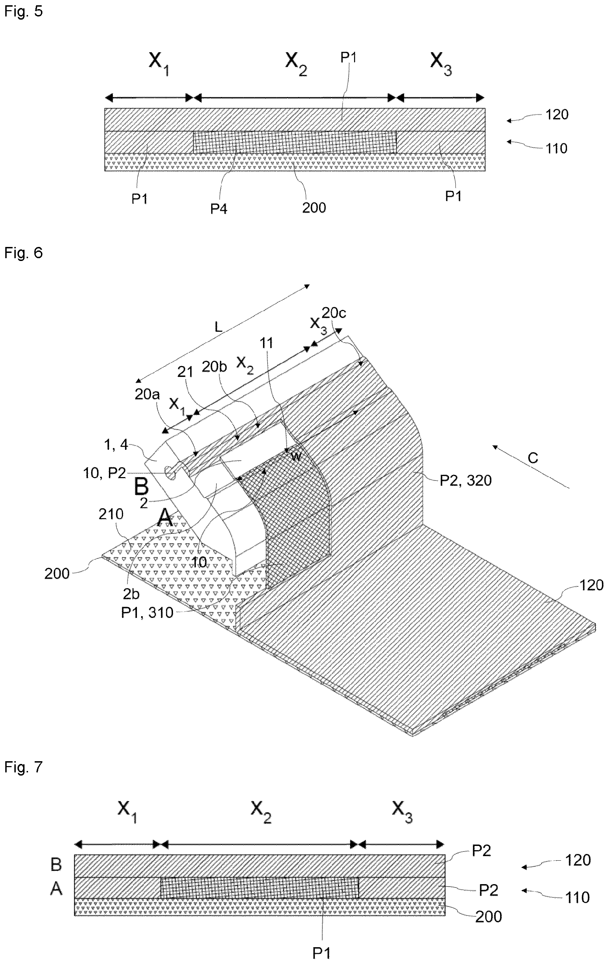

As shown in Fig. 5, the curtain coating process depicted in Fig. 4 results in a structured first functional layer 110, wherein the first preparation P1 laterally embeds the further preparation P4, and a uniform second functional layer 120 formed from the first preparation. For example, the first preparation P1 may form an active material of the electrochemical storage device and the further preparation P4 may form a solid-state electrolyte which is protected from ingress of moisture and air by the active material.

Fig. 6 shows a further embodiment of the coating device 1, wherein the second reservoir 20 and the corresponding second slot 21 are separated into a first section 20a having a width $X_1$ along the lateral axis L, a second section 20b having a width $X_2$ along the lateral axis L and a third section 20c having a width $X_3$ along the lateral axis L. This can be realized, for example, by separate manifolds as shown in Fig. 3. The sections 20a, 20b, 20c each comprise an associated pump inlet 13a, 13b, 13c (not shown in Fig. 6) branching off from a side of the second reservoir 20 opposite the slot 21, similar to the embodiment shown in Fig. 3.

The dispensing surface 2 of the coating device 1 comprises a recess 2b aligned with the first section 20a of the second slot 21 and comprising a width along the lateral axis L corresponding to the width $X_1$ of the first section 20a of the second slot 21, wherein the recess 2b extends from the second slot 21 along the entire dispensing surface 2 in the coating direction C. Furthermore, the dispensing surface 2 comprises a further recess (not shown) aligned with the third section 20c and comprising a width along the lateral axis L corresponding to the width $X_3$ of the third section 20c.

By means of the pump or pumps connected to the first pump inlet 13a and the third pump inlet 13c (see Fig. 3), the second preparation P2 is provided in the first section 20a and the third section 20c at a first flow rate, and by means of the pump connected to the second pump inlet 13b (see Fig. 3) the second preparation P2 is provided in the second section 20b at a second flow rate, such that a thicker layer of the second preparation P2 is deposited on the substrate 200 along the width $X_1$ and $X_3$ than along the width $X_2$. Simultaneously, the first preparation P1 is dispensed from the first slot 11 connected to the first reservoir 10, wherein the first slot 11 has a width w which is equal to the width $X_2$ of the second section 20b of the second reservoir 20 and second slot 21.

The resulting pattern of materials deposited on the substrate 200 by the curtain coating method depicted in Fig. 6 is shown in Fig. 7. Similar to the result shown in Fig. 5, the first functional layer 110 consists of a core of the first preparation P1 along the width $X_2$ flanked laterally by two sections where the second preparation P2 is deposited (along the width $X_1$ and the width $X_3$). The second functional layer 120 is a uniform layer of the second preparation P2 over the entire width $X_1 + X_2 + X_3$. The uniform upper surface of the second functional layer 120 is due to the recesses 2b of the dispensing surface 2, the depth of which (perpendicular to the dispensing surface 2) is equal to the thickness of the first functional layer 110 in this case, compensating for the additional volume of the second preparation P2 dispensed from the first section 20a and the third section 20c of the second slot 21. Similar to the above-discussed result shown in Fig. 5, the first preparation P1 may form an active material of the electrochemical storage device and the second preparation P2 may form a solid-state electrolyte which is protected from ingress of moisture and air by the active material.

In particular, to ensure that the second preparation $P_2$ is deposited along the width $X_1$ and $X_3$ at a thickness equal to the sum of the thickness of the layer of the first preparation $P_1$ and the second preparation along the width $X_2$ in a direction perpendicular to the lateral axis L, the flow rates $f_{P1,X2}$, $f_{P2,X1}$, $f_{P2,X2}$ and $f_{P2,X3}$ can be set according to the following formula:

$$\frac{f_{P2,X1}}{X1} = \frac{f_{P2,X3}}{X3} = \frac{f_{P2,X2}}{X2} + \frac{f_{P1,X2}}{X2},$$

where $f_{P1,X2}$ indicates the flow (volume per unit of time) of the first preparation along the width $X_2$, $f_{P2,X1}$ indicates the flow of the second preparation along the width $X_1$, $f_{P2,X2}$ indicates the flow of the second preparation along the width $X_2$, and $f_{P2,X3}$ indicates the flow of the second preparation along the width $X_3$.

List of reference signs

| | |
|---|---|
| 1 | Coating device |
| 2 | Dispensing surface |
| 2a | Curved section |
| 2b | Recess |
| 3 | Lip |
| 4 | Coating head |
| 10 | First reservoir |
| 10a | First section of first reservoir |
| 10b | Second section of first reservoir |
| 10c | Third section of first reservoir |
| 11 | First slot |
| 12 | Separator |
| 13a | First pump inlet |
| 13b | Second pump inlet |
| 13c | Third pump inlet |
| 20 | Second reservoir |
| 20a | First section of second reservoir |
| 20b | Second section of second reservoir |
| 20c | Third section of second reservoir |
| 21 | Second slot |
| 30 | Third reservoir |
| 31 | Third slot |
| 110 | First functional layer |
| 120 | Second functional layer |
| 130 | Third functional layer |
| 200 | Substrate |
| 210 | Coating surface |
| 310, 320, 330 | Curtain segments |
| C | Coating direction |
| L | Lateral axis |
| P1 | First preparation |
| P2 | Second preparation |
| P3 | Third preparation |

$$\frac{f_{P2,X1}}{X1} = \frac{f_{P2,X3}}{X3} = \frac{f_{P2,X2}}{X2} + \frac{f_{P1,X2}}{X2},$$

(continued)

| P4 | Further preparation |
|---|---|
| X1, X2, X3, X4, w | Width |

**Claims**

1. A method for generating functional layers (110, 120, 130) of an electrochemical storage device, comprising:

    a. providing a first preparation (P1) in a first reservoir (10) of a coating device (1),
    b. providing a second preparation (P2) in a second reservoir (20) of said coating device (1),
    c. placing said coating device (1) above a substrate (200) and moving said coating device (1) relative to the substrate (200) along a coating direction (C),
    d. dispensing the first preparation (P1) from the first reservoir (10) through a first slot (11) of the coating device (1) onto a coating surface (210) of the substrate (200), wherein the first slot (11) extends along a lateral axis (L) perpendicular to the coating direction (C) and parallel to the coating surface (210), and simultaneously dispensing the second preparation (P2) from the second reservoir (20) through a second slot (21) of the coating device (1) onto the substrate (200), wherein the second slot (21) extends along the lateral axis (L),
    e. wherein the first preparation (P1) and the second preparation (P3) form a curtain (310, 320) between the coating device (1) and the substrate (200), wherein particularly the first preparation (P1) and the second preparation (P2) exhibit a shear thinning behavior, and
    f. wherein a first functional layer (110) of the electrochemical storage device is formed on the coating surface (210) from the first preparation (P1), and a second functional layer (120) of the electrochemical storage device is simultaneously formed on the first functional layer (110) from the second preparation (P2).

2. The method according to claim 1, wherein the first functional layer (110) and/or the second functional layer (210) forms a solid-state electrolyte of the electrochemical storage device.

3. The method according to claim 2, wherein the solid-state electrolyte comprises

    a. an inorganic solid electrolyte, and/or
    b. a polymer electrolyte, particularly comprising a mixture of a polymer and a metal ion salt.

4. The method according to any one of the preceding claims, wherein the first functional layer (110) and/or the second functional layer (210) forms

    a. a cathode or an anode,
    b. an electron transport medium, particularly a current collector, and/or
    c. a protective layer

of the electrochemical storage device.

5. The method according to any one of the preceding claims, wherein the first preparation (P1) and/or the second preparation (P2) comprises at least one of the following components

    i. a solvent and/or a polymerizable monomer,
    ii. a metal ion host or a precursor capable of forming a metal ion host,
    iii. a solid ion conductor or a precursor capable of forming a solid ion conductor,
    iv. a solid electronic conductor.

6. The method according to any one of the preceding claims, wherein the first preparation (P1) and the second preparation (P2) comprise the same solvent and/or polymerizable monomer and/or the same salt concentration at the same concentration, such that no diffusion occurs at an interface of the first preparation (P1) and the second preparation (P2).

7. The method according to any one of the preceding claims, wherein the first preparation (P1) and/or the second preparation (P2) comprises a first polymer having a molecular weight from 1000 g mol$^{-1}$ to 100000 g mol$^{-1}$ and a second polymer having a molecular weight from 300000 g mol$^{-1}$ to 1200000 g mol$^{-1}$.

8. The method according to any one of the preceding claims, wherein the first reservoir (10) and the first slot (11) or the second reservoir (20) and the second slot (21) are divided into a first section (10a, 20a) and a second section (10b, 20b) along the lateral axis (L), and wherein the first section (10a, 20a) and the second section (10b, 20b) are physically separated from each other, wherein particularly the first section (10a, 20a) forms an end section of the first or second reservoir (10, 20) along the lateral axis (L).

9. The method according to claim 8, wherein the second preparation (P2) is provided in the first section (10a, 20a) at a first flow rate and the second preparation (P2) is provided in the second section (10b, 20b) at a second flow rate, wherein the first flow rate and the second flow rate are set such that the second functional layer (120) formed by the second preparation (P2) dispensed from the first section (20a) comprises a greater thickness perpendicular to the coating surface (210) than the second functional layer (120) formed by the second preparation (P2) dispensed from the second section (20b), wherein particularly the first slot (11) comprises a width (w) extending along the lateral axis (L) which is equal to the width (w) of the second section (20b), such that the first functional layer (110) formed by the first preparation (P1) is embedded by the second functional layer (120) formed by the second preparation (P2), wherein more particularly the coating device (1) comprises a dispensing surface (2) configured to receive the first preparation (P1) dispensed from the first slot (11) and the second preparation (P2) dispensed from the second slot (21), wherein particularly the dispensing surface (2) comprises a recess (2a) comprising a width along the lateral axis (L) corresponding to the width of the first section (10a, 20a) of the respective reservoir (10, 20) and the respective slot (11, 21), wherein even more particularly the recess (2a) extends from the respective slot (11, 21) along the entire dispensing surface (2) in the coating direction (C).

10. The method according to claim 8, wherein the first or second preparation (P1, P2) is provided in the first section (10a, 20a) of the first or second reservoir (10, 20) and a further preparation (P4) is provided in the second section (10b, 20b) of the first or second reservoir (10, 20), such that the first or second preparation (P1, P2) and the further preparation (P4) are arranged in a pre-defined pattern on the coating surface (210) of the substrate (200) to jointly form the first or second functional layer (110, 120).

11. A coating device (1) for generating functional layers (110, 120, 130) of an electrochemical storage device comprising

   a. a first reservoir (10) for receiving a first preparation (P1),
   b. a first slot (11) for dispensing the first preparation (P1) from the first reservoir (10) onto a coating surface (210) of a substrate (200), such that the first preparation (P1) forms a curtain (310) between the coating device (1) and the coating surface (210),
   c. a second reservoir (20) for receiving a second preparation (P2),
   d. a second slot (21) for dispensing the second preparation (P2) from the second reservoir (20) onto the coating surface (210) simultaneously to the first preparation (P1), such that the second preparation (P2) forms a curtain (320) between the coating device (1) and the coating surface (210),
   e. wherein the coating device (1) is configured to be placed above the substrate (200) and moved relative to the substrate (200) along a coating direction (C),

   **characterized in that**
   the first slot (11) and the second slot (21) are configured and arranged such that a first functional layer (110) of the electrochemical storage device can be formed on the coating surface (210) from the first preparation (P1), and a second functional layer (120) of the electrochemical storage device can be simultaneously formed on the first functional layer (110) from the second preparation (P2).

12. The coating device (1) according to claim 11, **characterized in that** the first reservoir (10) or the second reservoir (20) are divided into a first section (10a, 20a) and a second section (10b, 20b) along the lateral axis (L), wherein the first section (10a, 20a) and the second section (10b, 20b) are physically separated, wherein the first or second reservoir (10, 20) comprises a first pump inlet (13a) connected to the first section (10a, 20a) and a second pump inlet (13b) connected to the second section (10b, 20b), wherein the first pump inlet (13a) and the second pump inlet (13b) are configured to be connected to respective pumps to provide respective preparations in the first section (10a, 20a) and the second section (10b, 20b), wherein particularly the first section (10a, 20a) forms an end section of the first reservoir (10) along the lateral axis (L).

**13.** The coating device (1) according to claim 11 or 12, **characterized in that** the coating device (1) comprises a dispensing surface (2) configured to receive the first preparation (P1) dispensed from the first slot (11) and the second preparation (P2) dispensed from the second slot (21), wherein particularly the dispensing surface (2) comprises a recess (2a) comprising a width along the lateral axis (L) corresponding to the width of the first section (10a, 20a) of the respective reservoir (10, 20) and the respective slot (11, 21), wherein more particularly the recess (2a) extends from the respective slot (11, 21) along the entire dispensing surface (2) in the coating direction (C).

**14.** A preparation (P1, P2, P3, P4) for forming a functional layer (110, 120, 130) of an electrochemical storage device comprising at least one of the following components

    i. a solvent and/or a polymerizable monomer,
    ii. a metal ion host or a precursor capable of forming a metal ion host,
    iii. a solid ion conductor or a precursor capable of forming a solid ion conductor,
    iv. a solid electronic conductor or a precursor capable of forming a solid electronic conductor,

wherein particularly the preparation (P1, P2, P3, P4) exhibits a shear thinning behavior, wherein the preparation (P1, P2, P3, P4) is capable of forming a curtain (310, 320, 330) between a coating device (1) and a coating surface (210) of a substrate (200) when the preparation (P1, P2, P3, P4) is dispensed from a slot (11, 21, 31) of the coating device (1) onto the coating surface (210).

**15.** The preparation (P1, P2, P3, P4) according to claim 14, **characterized in that** the preparation (P1, P2, P3, P4) comprises a first polymer having a molecular weight from 1000 g mol$^{-1}$ to 100000 g mol$^{-1}$ and a second polymer having a molecular weight from 300000 g mol$^{-1}$ to 1200000 g mol$^{-1}$.

Fig. 1

Fig. 2

Fig. 3

Fig. 4

Fig. 5

Fig. 6

Fig. 7

Europäisches
Patentamt

European
Patent Office

Office européen
des brevets

# EUROPEAN SEARCH REPORT

Application Number

EP 20 18 7223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2017/074116 A1 (LG CHEMICAL LTD [KR])<br>4 May 2017 (2017-05-04)<br>* abstract *<br>* claims 1-11 *<br>* Polymer electrolyte membrane fabrication *<br>* examples 1-5 * | 14,15<br><br>1-13 | INV.<br>H01M10/052<br>H01M10/0565 |
| X<br>A | US 2017/301892 A1 (KWAK BYUNG-SUNG [US] ET AL) 19 October 2017 (2017-10-19)<br>* abstract *<br>* claims 1-20 * | 14,15<br><br>1-13 | |
| A | WO 2012/071303 A2 (3M INNOVATIVE PROPERTIES CO [US]; DUDLEY WILLIAM R [US] ET AL.) 31 May 2012 (2012-05-31)<br>* abstract *<br>* claims 1-12 * | 1-15 | |
| A | US 5 843 530 A (JERRY GLEN A [US] ET AL)<br>1 December 1998 (1998-12-01)<br>* abstract *<br>* claims 1-21 * | 1-15 | TECHNICAL FIELDS SEARCHED (IPC)<br><br>H01M |
| A | WO 2014/102520 A1 (I TEN [FR])<br>3 July 2014 (2014-07-03)<br>* the whole document * | 1-15 | |
| A | WO 2019/161301 A1 (UNIV MARYLAND [US])<br>22 August 2019 (2019-08-22)<br>* the whole document * | 1-15 | |

The present search report has been drawn up for all claims

| Place of search | Date of completion of the search | Examiner |
|---|---|---|
| Munich | 8 December 2020 | Stachowiak, Olaf |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                           
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 18 7223

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2020

| Patent document cited in search report | | Publication date | Patent family member(s) | | Publication date |
|---|---|---|---|---|---|
| WO 2017074116 | A1 | 04-05-2017 | NONE | | |
| US 2017301892 | A1 | 19-10-2017 | TW | 201737530 A | 16-10-2017 |
| | | | TW | 201803184 A | 16-01-2018 |
| | | | TW | 201803189 A | 16-01-2018 |
| | | | TW | 201803191 A | 16-01-2018 |
| | | | TW | 201803193 A | 16-01-2018 |
| | | | TW | 201806766 A | 01-03-2018 |
| | | | TW | 201807861 A | 01-03-2018 |
| | | | TW | 201810766 A | 16-03-2018 |
| | | | TW | 201810767 A | 16-03-2018 |
| | | | TW | 201810768 A | 16-03-2018 |
| | | | TW | 201810769 A | 16-03-2018 |
| | | | US | 2017301892 A1 | 19-10-2017 |
| | | | US | 2017301893 A1 | 19-10-2017 |
| | | | US | 2017301894 A1 | 19-10-2017 |
| | | | US | 2017301895 A1 | 19-10-2017 |
| | | | US | 2017301897 A1 | 19-10-2017 |
| | | | US | 2017301926 A1 | 19-10-2017 |
| | | | US | 2017301928 A1 | 19-10-2017 |
| | | | US | 2017301954 A1 | 19-10-2017 |
| | | | US | 2017301955 A1 | 19-10-2017 |
| | | | US | 2017301956 A1 | 19-10-2017 |
| | | | US | 2017301957 A1 | 19-10-2017 |
| | | | WO | 2017180941 A1 | 19-10-2017 |
| | | | WO | 2017180942 A1 | 19-10-2017 |
| | | | WO | 2017180943 A1 | 19-10-2017 |
| | | | WO | 2017180945 A1 | 19-10-2017 |
| | | | WO | 2017180947 A1 | 19-10-2017 |
| | | | WO | 2017180955 A2 | 19-10-2017 |
| | | | WO | 2017180959 A2 | 19-10-2017 |
| | | | WO | 2017180962 A2 | 19-10-2017 |
| | | | WO | 2017180967 A2 | 19-10-2017 |
| | | | WO | 2017180973 A1 | 19-10-2017 |
| | | | WO | 2017180975 A2 | 19-10-2017 |
| WO 2012071303 | A2 | 31-05-2012 | BR | 112013012573 A2 | 08-05-2018 |
| | | | CN | 103228368 A | 31-07-2013 |
| | | | EP | 2643098 A2 | 02-10-2013 |
| | | | KR | 20130130750 A | 02-12-2013 |
| | | | SG | 190831 A1 | 31-07-2013 |
| | | | US | 2013230653 A1 | 05-09-2013 |
| | | | WO | 2012071303 A2 | 31-05-2012 |
| US 5843530 | A | 01-12-1998 | AU | 5098598 A | 07-08-1998 |
| | | | DE | 69710786 T2 | 31-10-2002 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 20 18 7223

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2020

| Patent document cited in search report | | Publication date | Patent family member(s) | | Publication date |
|---|---|---|---|---|---|
| | | | EP | 0954383 A1 | 10-11-1999 |
| | | | JP | 4301578 B2 | 22-07-2009 |
| | | | JP | 2001509078 A | 10-07-2001 |
| | | | KR | 20000070302 A | 25-11-2000 |
| | | | US | 5843530 A | 01-12-1998 |
| | | | WO | 9831472 A1 | 23-07-1998 |
| WO 2014102520 | A1 | 03-07-2014 | BR | 112015015702 A2 | 11-07-2017 |
| | | | CN | 104904039 A | 09-09-2015 |
| | | | EP | 2939295 A1 | 04-11-2015 |
| | | | FR | 3000616 A1 | 04-07-2014 |
| | | | JP | 6644549 B2 | 12-02-2020 |
| | | | JP | 2016507865 A | 10-03-2016 |
| | | | KR | 20150103041 A | 09-09-2015 |
| | | | US | 2015333376 A1 | 19-11-2015 |
| | | | US | 2020303718 A1 | 24-09-2020 |
| | | | WO | 2014102520 A1 | 03-07-2014 |
| WO 2019161301 | A1 | 22-08-2019 | CN | 111886090 A | 03-11-2020 |
| | | | EP | 3752308 A1 | 23-12-2020 |
| | | | KR | 20200121827 A | 26-10-2020 |
| | | | WO | 2019161301 A1 | 22-08-2019 |

EPO FORM P0459

For more details about this annex : see Official Journal of the European Patent Office, No. 12/82